# EUROPÄISCHE PATENTSCHRIFT

(11) **EP 0 727 864 B1**
(45) Veröffentlichungstag und Bekanntmachung des Hinweises auf die Patenterteilung: **02.01.2003**
(21) Anmeldenummer: 96100710.1
(22) Anmeldetag: 18.01.1996
(51) Int. Cl.: H02K 3/50, H02K 11/00

(54) **Verschaltungsanordnung für einen Elektromotor**
Electric motor interconnection board
Panneau d'interconnexion pour moteur électrique

(30) Priorität: 18.02.1995 DE 19505557
(43) Veröffentlichungstag der Anmeldung: 21.08.1996
(73) Patentinhaber: ebm Werke GmbH & Co. KG, 74673 Mulfingen (DE)
(72) Erfinder: Erneker, Roland, D-74653 Künzelsau-Amrichshausen (DE); Bamberger, Bernhard, D-97922 Lauda Unterbalbach (DE); Pollok, Erich, D-97996 Niederstetten (DE)
(74) Vertreter: Patentanwälte Dr. Solf & Zapf

(56) Entgegenhaltungen:
- EP-A- 0 548 610
- EP-A- 0 603 478
- EP-A- 0 638 982
- DE-A- 4 422 988

## Beschreibung

Die vorliegende Erfindung betrifft eine Verschaltungsanordnung zum Verbinden von Drahtenden einer Statorwicklung eines Elektromotors, insbesondere eines Aussenläufermotors, mit Anschlußleitem, gemäß dem Oberbegriff des Patentanspruchs 1.

Eine derartige Verschaltungsanordnung ist aus der EP-A-0 603 478 bzw. der parallelen DE-A-42 43 845 bekannt Sie besteht aus einer Verschaltungsplatte, die mit einer Aufnahmeöffnung auf einem Stimisolationsschaft des Stators befestigt wird, und aus Verbindungselementen, die einerseits in taschenförmigen Ausnehmungen der Verschaltungsplatte angeordnete Steckverbinderabschnitte für die Anschlußleiter eines Motoranschlußkabels und andererseits Anschlußfahnen für den elektrischen Anschluß der Wicklungsdrahtenden aufweisen. Die Verbindungselemente sind hierbei als Blechstanzteile ausgebildet, die zur Halterung auf der Verschaltungsplatte Löcher aufweisen, die von stiftartigen Erhebungen der Verschaltungsplatte durchgriffen werden. Die Verbindungselemente werden mittels der Erhebungen durch Wärmeeinwirkung und Aufbringen eines Preßdruckes auf der Verschaltungsplatte gehaltert ("verstemmt"). Die bekannte Verschaltungsplatte besitzt ferner einen hohlzylindrischen Ansatz, der eine Aufnahme zum Einsetzen eines Temperaturwächters bildet. Solche Temperaturwächter werden innerhalb von Elektromotoren dazu verwendet, im Falle von Überhitzungen den Motorstrom abzuschalten. Hierzu steht der Temperaturwächter in wärmeleitendem Kontakt mit der Statorwicklung und ist elektrisch in Reihe mit der Statorwicklung geschaltet; er unterbricht die Verbindung im Falle der Überschreitung einer bestimmten Abschalttemperatur. Bei der bekannten Anordnung sind zum Kontaktieren des Temperaturwächters zwei ebenfalls als Blechstanzteile ausgebildete Leiterbahnen vorgesehen, die anderendig mit zwei Verbinderelementen verbunden sind. Aufgrund der Ausbildung dieser Verschaltungsanordnung ist sie ausschließlich für Motoren mit Temperaturwächter geeignet, weil jede Leiterbahn einen bestimmten Kontaktbereich des Temperaturwächters kontaktiert und ohne einen eingesetzten Temperaturwächter folglich der Stromfluss unterbrochen wäre.

In vielen Anwendungsfällen, insbesondere dann, wenn der Motor in ein bestehendes Kundengerät eingebaut werden soll, kann der Motorschutz durch eine extern aufgebaute, im Kundengerät bereits vorhandene Sicherung mit übernommen werden. In diesem Falle kann der Temperaturwächter innerhalb des Motors entfallen, und der Motor kann kostengünstiger produziert werden.

Das Dokument EP-A-0 638 982 offenbart in den Fig. 1 bis 6 einen Stand der Technik, wonach ein kleiner Kommutatormotor Anschlußelemente für äußere Anschlußleiter aufweist, die jeweils über Bürsten mit einem Läufer verbunden sind. Diese Anordnung dient somit nicht zum Verbinden von Anschlußleitern mit Drahtenden einer Statorwicklung. Allerdings wird dabei ein temperaturempfindliches Widerstandselement zwischen zwei Kontaktelementen angeordnet, wobei der Temperaturwiderstand auch weggelassen bzw. entnommen werden kann, so daß dann die beiden Kontaktelemente unmittelbar aneinander anliegen. Ein Temperaturwächter im gattungsgemäßen Sinne stellt - im Unterschied zu dem Temperaturwiderstand - ein temperaturabhängig schaltendes Schaltelement dar. Solche Temperaturwächter haben heute zumeist eine Ausgestaltung analog zu kleinen, flach-zylindrischen Batterie-Knopfzellen jeweils mit einem ersten Kontakt in der Mitte einer Flachseite und einem vom gesamten restlichen Gehäuse gebildeten zweiten Kontakt. Würde ein derartiger Temperaturwächter im Sinne der EP-A-0 638 982 durch zwei gegenüberliegende Kontaktelemente kontaktiert, so könnten daraus Probleme hinsichtlich der in den einschlägigen Bestimmungen geforderten Sicherheitsabstände zur Vermeidung von Kriechstrecken resultieren.

Der vorliegenden Erfindung liegt die Aufgabe zugrunde, eine Verschaltungsanordnung der gattungsgemäßen Art zu schaffen, die sich einerseits bei grundsätzlich gleicher Grundkonzeption sowohl für Motoren mit Temperaturwächter als auch für preiswertere Motoren ohne Temperaturwächter eignet, so daß bezüglich der Fertigung und Lagerhaltung der entsprechenden Elektromotoren eine besonders gute Wirtschaftlichkeit erreicht wird, wobei andererseits auch eine hohe elektrische Sicherheit gewährleistet sein soll.

Erfindungsgemäß wird dies durch die kennzeichnenden Merkmale des neuen Anspruchs 1 erreicht.

Durch die erfindungsgemäße Ausgestaltung kann sehr einfach wahlweise eine Ausführung mit Temperaturwächter oder eine Ausführung ohne Temperaturwächter realisiert werden, denn aufgrund des erfindungsgemäßen, im Bereich der Temperaturwächter-Aufnahme angeordneten Kontaktfederelementes des ersten Verbinderelementes sowie aufgrund der Gegenkontaktfläche des zweiten Verbinderelementes kann entweder zwischen diesen genannten Elementen innerhalb der Aufnahme ein Temperaturwächter angeordnet sein (mittelbare elektrische Verbindung des Kontaktfederelementes mit der Gegenkontaktfläche), oder diese Elemente können - ohne Zwischenanordnung eines Temperaturwächters - einander unmittelbar kontaktieren. Durch die Erfindung können somit auf der Basis derselben Grundkonzeption auf einfache Weise Motoren wahlweise mit Temperaturwächter oder ohne Temperaturwächter hergestellt werden. Dies führt insgesamt zu einer besonders guten Wirtschaftlichkeit, da der Temperaturwächter eingespart werden kann, ohne dass hierzu eine spezielle Motor-Ausführung erforderlich wäre. Dabei kann durch den erfindungsgemäßen, isolierenden Deckel und dessen von dem Kontaktfederelement durchgriffene Lochöffnung das erste Verbinderelement vorteilhafterweise sehr flach ausgeführt sein, weil trotz einer mittigen Kontaktierung der Gegenkontaktfläche im übrigen Bereich durch den "unterhalb" des Verbinderelementes liegenden Deckel eine Isolierung zur Gewährleistung eines ausreichenden Sicherheitsabstandes gewährleistet ist.

In einer besonders vorteilhaften Ausführungsform der Erfindung ist vorgesehen, dass für die beiden Fälle mit und ohne Temperaturwächter das zweite Verbinderelement in zwei geringfügig verschiedenen Ausführungsformen vorgesehen ist. In der ersten Ausführung weist das zweite Verbinderelement einen die Gegenkontaktfläche bildenden Kontaktabschnitt auf, der auf der dem Kontaktfederelement zugekehrten Öffnungsseite der Aufnahme auf einer dort gebildeten Auflagestufe gegen eine von dem Kontaktfederelement bewirkte Andruckkraft abgestützt ist. Hierbei bildet der Kontaktabschnitt praktisch eine Art "Deckel", der die - ohne Temperaturwächter frei bzw. leer bleibende - Aufnahme abschließt. Die Gegenkontaktfläche liegt hierbei zumindest annähernd in der Ebene, in der auch eine Kontaktfläche eines in der Aufnahme sitzenden Temperaturwächters angeordnet wäre. Demgegenüber besitzt das zweite Verbinderelement in seiner zweiten Ausführungsform einen die Gegenkontaktfläche aufweisenden bzw. bildenden Kontaktabschnitt, der innerhalb der Aufnahme auf der dem Kontaktfederelement abgekehrten Seite des Temperaturwächters z. B. auf einer Bodenwandung liegend angeordnet ist. Dieser Kontaktabschnitt hat somit eine gegenüber demjenigen der ersten Ausführung geringere Flächengröße, wobei er relativ zu dem übrigen Teil des zweiten Verbinderelementes nach unten in die Aufnahme hinein verkröpft ist. Diese vorteilhafte Ausgestaltung der Erfindung führt zu optimalen Kontaktverhältnissen des Kontaktfederelementes, da dieses in beiden wahlweise möglichen Fällen (mit/ohne Temperaturwächter) seinen Anlagekontakt im Wesentlichen in derselben Kontaktebene hat. Die beiden verschiedenen Ausführungen des zweiten Verbinderelementes können wahlweise - und somit "baukastenprinzipartig" - eingesetzt werden, je nachdem welche Motorausführung gewünscht ist.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im folgenden die Erfindung näher erläutert werden. Dabei zeigen:
- Fig. 1: eine Draufsicht der wesentlichen Bestandteile einer erfindungsgemäßen Verschaltungsanordnung in einem Zustand nach fertigem Verschalten (Betriebszustand),
- Fig. 2: eine Ansicht wie in Fig. 1, jedoch in einem Zustand zum Anschluß der Wicklungsdrahtenden (Anschlußzustand),
- Fig. 3: eine gegenüber Fig. 1 und 2 verkleinerte Draufsicht eines scheibenförmigen Basisteils der Verschaltungsanordnung,
- Fig. 4: eine Schnittansicht des Basisteils in der Schnittebene IV-IV gemäß Fig. 3,
- Fig. 5: eine Draufsicht eines Deckels für die Temperaturwächter-Aufnahme des Basisteils,
- Fig. 6: eine Schnittansicht des Deckels in der Schnitt-ebene VI-VI gemäß Fig. 5,
- Fig. 7: eine Draufsicht von zu dem Basisteil gehörenden Verbinderelementen der Verschaltungsanordnung,
- Fig. 8: einen Schnitt durch den Bereich der Temperaturwächter-Aufnahme längs der Linie VIII-VIII in Fig. 1 in einer Ausführung mit eingesetztem Temperaturwächter,
- Fig. 9: einen Schnitt durch den Bereich der Temperaturwächter-Aufnahme längs der Linie IX-IX in Fig. 1 ebenfalls in der Ausführung mit eingesetztem Temperaturwächter,
- Fig. 10: eine Ansicht analog zu Fig. 8, jedoch in einer Ausführung ohne Temperaturwächter,
- Fig. 11: eine Ansicht analog zu Fig. 9 in der Ausführung ohne Temperaturwächter und
- Fig. 12: einen Halb-Axialschnitt durch einen Teilbereich eines mit der erfindungsgemäßen Verschaltungsanordnung ausgestatteten Elektromotors.

In den verschiedenen Figuren der Zeichnung sind gleiche Teile stets mit den gleichen Bezugszeichen versehen. Daher gilt jede eventuell nur einmal unter Bezugnahme auf eine der Zeichnungsfiguren vorkommende Beschreibung eines Teils analog auch bezüglich der anderen Zeichnungsfiguren, in denen dieses Teil mit dem entsprechenden Bezugszeichen ebenfalls zu erkennen ist.

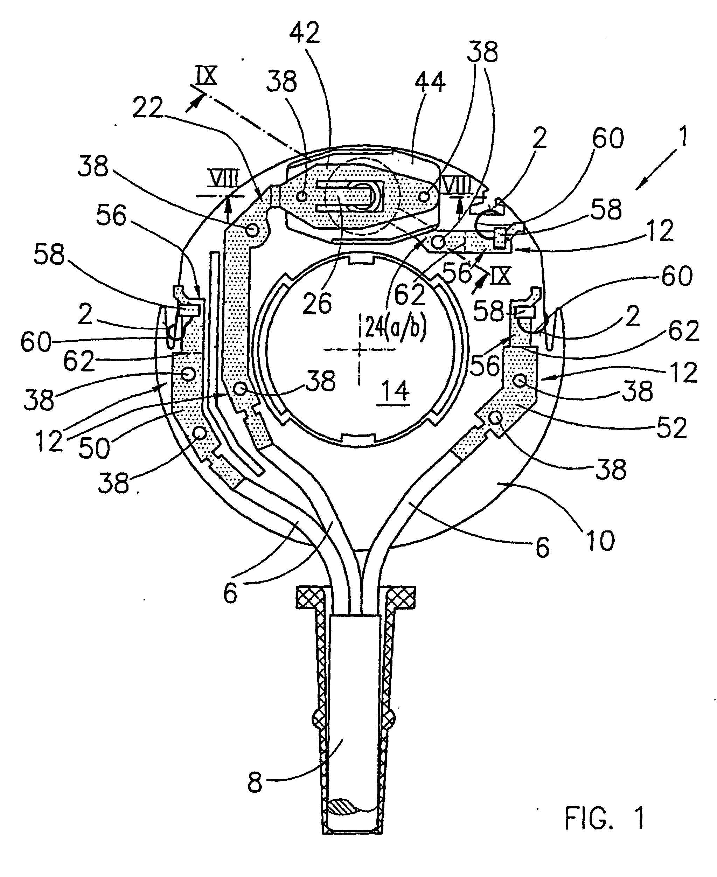

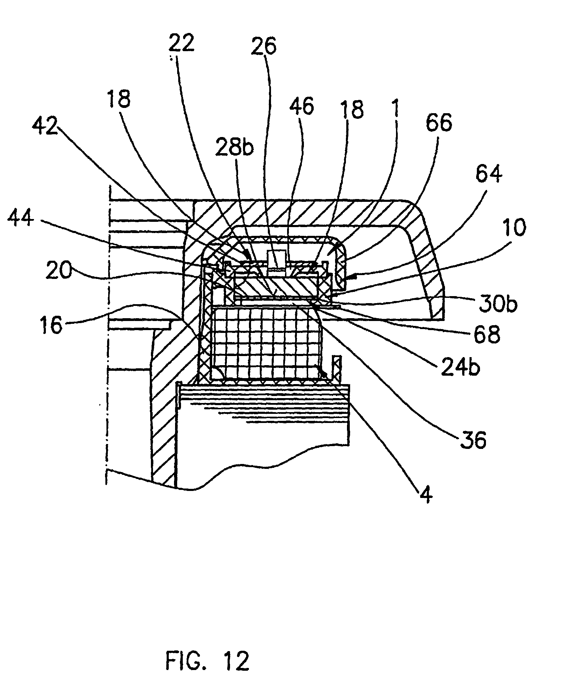

Wie sich zunächst aus Fig. 1 ergibt, dient eine erfindungsgemäße Verschaltungsanordnung 1 zum Verbinden bzw. Verschalten von Drahtenden 2 einer Statorwicklung 4 (vgl. Fig. 12) insbesondere eines Elektro-Außenläufermotors mit Anschlußleitern 6 eines Motor-Anschlußkabels 8. Hierzu besteht die Verschaltungsanordnung 1 im wesentlichen aus einem vorzugsweise ringscheibenförmigen Basisteil 10 und daran bzw. darauf gehalterten, elektrischen Verbinderelementen 12, an denen die Drahtenden 2 und/oder die Anschlußleiter 6 elektrisch anschließbar sind.

Das Basisteil 10 besteht aus einem elektrisch isolierenden Material, zweckmäßig Kunststoff, und weist eine vorzugsweise etwa zentrische Öffnung 14 auf, mit der das Basisteil 10 - siehe hierzu Fig. 12 - auf einem Stirnisolationsschaft 16 des Motors bzw. Stators so befestigbar ist, daß das scheibenförmige Basisteil 10 auch als Wickelkopfabdeckung fungiert.

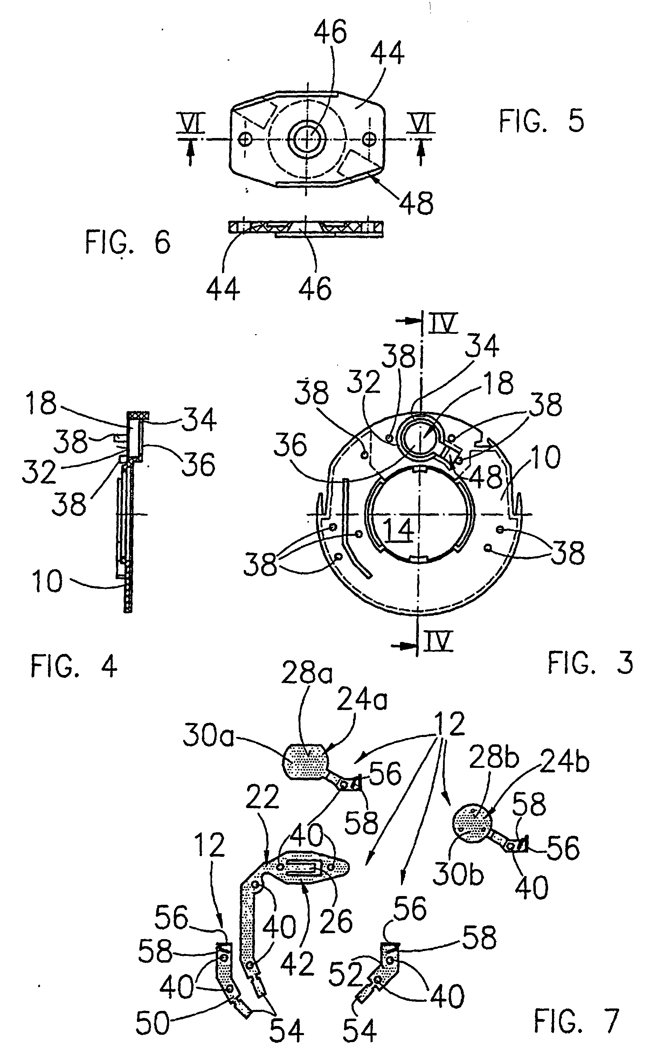

Zusätzlich zu den Verbinderelementen 12 ist zudem eine Aufnahme 18 für einen Temperaturwächter 20 vorgesehen. Es wird vorzugsweise ein Temperaturwächter 20 verwendet, der im wesentlichen als flacher, zylindrischer Körper ausgebildet ist. Hierzu weist die Aufnahme 18 eine entsprechende Innenkontur mit flacher, zylindrischer Form auf. Dies ist am besten in Fig. 3 und 4 zu erkennen. Zweckmäßigerweise ist die Aufnahme 18 durch entsprechende Raumform des bevorzugt als einstückiges Kunststoff-Formteil ausgebildeten Basisteils 10 gebildet.

Zu den auf dem Basisteil 10 gehalterten Verbinderelementen 12 gehören nun erfindungsgemäß ein erstes Verbinderelement 22 und ein zweites Verbinderelement 24, wobei das zweite Verbinderelement 24 vorzugsweise in zwei geringfügig verschiedenen Ausführungsformen vorhanden ist; in den Fig. 7 bis 11 sind diese geringfügig verschiedenen Verbinderelemente mit den Bezugszeichen 24a und 24b versehen. Das erste Verbinderelement 22 weist nun erfindungsgemäß ein Kontaktfederelement 26 auf, welches im Bereich der Aufnahme 18 für den Temperaturwächter 20 mit einer Gegenkontaktfläche 28 des zweiten Verbinderelementes 24 elektrisch leitend verbunden ist. Erfindungsgemäß ist es somit möglich, wahlweise eine Ausführung mit oder ohne Temperaturwächter vorzusehen. Dies soll nun anhand der Fig. 7 bis 11 genauer erläutert werden.

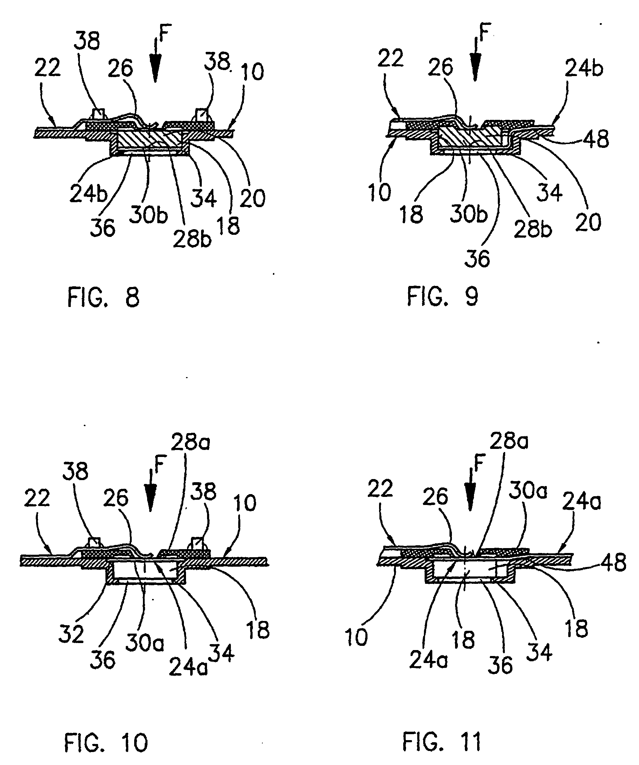

In Fig. 10 und 11 ist eine Ausführung ohne Temperaturwächter veranschaulicht. Hierbei ist das erste Verbinderelement 22 mit dem zweiten Verbinderelement 24a unmittelbar durch direkten Anlagekontakt des Kontaktfederelementes 26 an der Gegenkontaktfläche - hier mit 28a bezeichnet - verbunden. Vorzugsweise ist hierzu das zweite Verbinderelement 24a mit einem die Gegenkontaktfläche 28a aufweisenden Kontaktabschnitt 30a auf der dem Kontaktfederelement 26 zugekehrten Öffnungsseite der Aufnahme 18 auf einer dort gebildeten, vorzugsweise ringförmigen Auflagestufe 32 (siehe hierzu insbesondere Fig. 3 und 4) gegen eine von dem Kontaktfederelement 26 bewirkte Andruckkraft F abgestützt. Hierbei bildet somit der Kontaktabschnitt 30a praktisch eine Art Deckel für die bei dieser Motorausführung leer bleibende Aufnahme 18. Dies ist in den Fig. 10 und 11 gut zu erkennen.

In den Fig. 8 und 9 ist nun eine Anordnung mit Temperaturwächter 20 dargestellt. Hierbei ist das erste Verbinderelement 22 mittelbar über den in der Aufnahme 18 angeordneten Temperaturwächter 20 mit dem zweiten Verbinderelement 24b verbunden, wobei der Temperaturwächter 20 zwischen dem Kontaktfederelement 26 und der Gegenkontaktfläche 28b jeweils mit elektrischem Anlagekontakt angeordnet ist. Auch hierbei liegt das Kontaktfederelement 26 mit der Andruckkraft F auf dem Temperaturwächter 20 auf. Bei dieser Ausführung ist das zweite Verbinderelement 24b mit einem die Gegenkontaktfläche 28b aufweisenden Kontaktabschnitt 30b innerhalb der Aufnahme 18 auf der dem Kontaktfederelement 26 abgekehrten Seite des Temperaturwächters 20 angeordnet. Wie sich aus Fig. 7 ergibt, ist aus diesem Grund der Kontaktabschnitt 30b hinsichtlich seiner Flächengröße kleiner als der Kontaktabschnitt 30a der anderen Ausführungsform des zweiten Verbinderelementes 24a ausgebildet. Hierdurch kann der Kontaktabschnitt 30b in die Aufnahme 18 eingesetzt werden, anstatt auf der Auflagestufe 32 aufzuliegen. Zweckmäßigerweise liegt der Kontaktabschnitt 30b auf einer die Aufnahme begrenzenden Bodenwandung 34 des Basisteils 10 auf. Dabei ist es vorteilhaft, wenn in dieser Bodenwandung 34 eine Lochöffnung 36 derart gebildet ist, daß im mit dem Stator verbundenen Zustand des Basisteils 10 - siehe hierzu Fig. 12 - der in der Aufnahme 18 angeordnete Temperaturwächter 20 durch die Lochöffnung 36 hindurch mit der Wärme der Statorwicklung 4 beaufschlagt wird, und zwar mittelbar über den Kontaktabschnitt 30b des zweiten Verbinderelementes 24b sowie gegebenenfalls über eine Schaltungsisolation 68. Aufgrund der Lochöffnung 36 verbleibt somit von der Bodenwandung 34 lediglich ein schmaler, radial nach innen ragender Ringsteg zur Abstützung des Kontaktabschnittes 30b und des Temperaturwächters 20 gegen die Kraft F.

Es ist zweckmäßig, wenn die Verbinderelemente 12 als Blechstanzteile ausgebildet sind, die in im wesentlichen flach auf dem ringscheibenförmigen Basisteil liegender Anordnung gehaltert sind. Die Halterung erfolgt vorzugsweise durch Stiftansätze 38 des Basisteils 10, die zur Erzeugung von Formschlußverbindungen durch Löcher 40 der Verbinderelemente 12 geführt und insbesondere thermisch-mechanisch "nietkopfartig" verformt sind ("verstemmt"). Die Erwärmung kann mit Vorteil im Ultraschallverfahren erfolgen. In den Zeichnungen sind die Stiftansätze 38 in ihrem noch nicht verstemmten Zustand dargestellt. In Fig. 8 und 10 ist jedoch auch der verstemmte Zustand punktiert angedeutet.

Wie sich nun weiterhin aus Fig. 1, 2 und 7 ergibt, weist das erste Verbinderelement 22 einen den Bereich der Temperaturwächter-Aufnahme 18 überdeckenden Brückenabschnitt 42 auf, aus dem das Kontaktfederelement 26 zungenartig freigeschnitten oder freigespart bzw. freigestanzt und in Richtung der Aufnahme 18 so gebogen ist, daß es mit seinem freien Ende den Temperaturwächter 20 oder den Kontaktabschnitt 30a kontaktieren kann und dann mit der Kraft F anliegt. Die Bogenform des Kontaktfederelementes 26 ist in den Fig. 8 bis 11 gut zu erkennen.

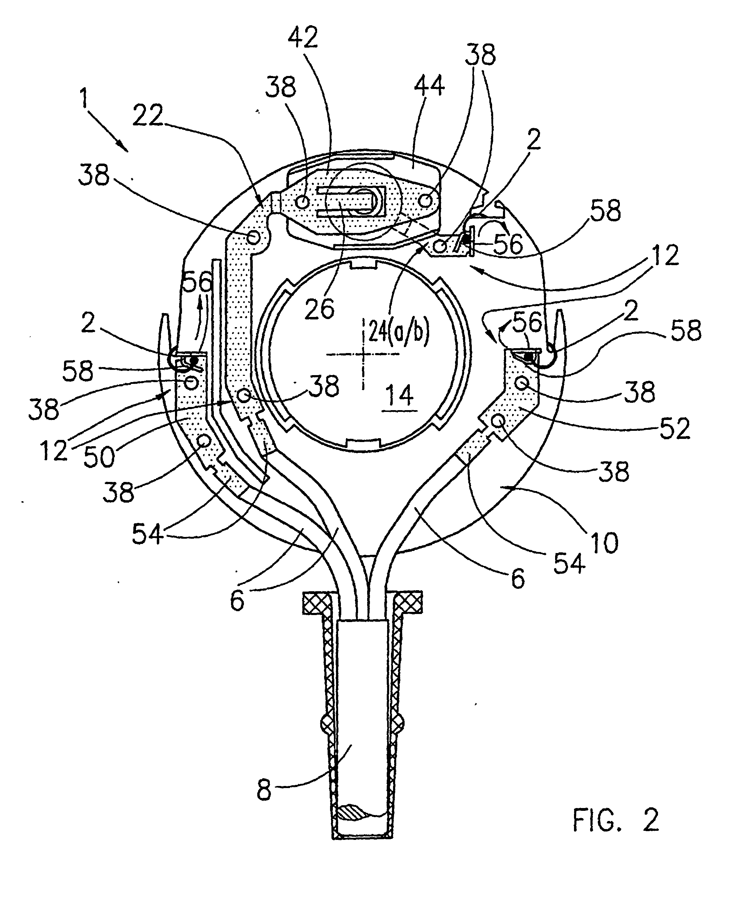

Erfindungsgemäß ist zusätzlich ein die Aufnahme 18 verschließender Deckel 44 aus einem elektrisch isolierenden Material vorgesehen, wobei dieser Deckel 44 eine von dem Kontaktfederelement 26 durchgriffene Lochöffnung 46 aufweist. Der Deckel 44 ist gesondert in den Fig. 5 und 6 dargestellt. Hierbei liegt nun der Brückenabschnitt 42 des ersten Verbinderelementes 22 auf dem Deckel 44 auf und ist somit gegenüber dem übrigen Teil, der auf der Oberfläche des Basisteils 10 aufliegt, nach oben verkröpft. Vorzugsweise sind hierbei der Deckel 44 und der Brückenabschnitt 42 gemeinsam an dem Basisteil 10 über Stiftansätze 38 gehaltert. Dies ist in Fig. 1 und 2 zu erkennen. Zwischen dem Basisteil 10 und dem Deckel 44 ist hierbei eine schlitzartige Durchführöffnung 48 für den Kontaktabschnitt 30a, b des zweiten Verbinderelementes 24a, b gebildet (vgl. hierzu Fig. 3, 5, 9 und 11).

Wie sich nun aus Fig. 7 weiterhin ergibt, gehören zu den Verbinderelementen 12 noch ein drittes Verbinderelement 50 und ein viertes Verbinderelement 52.

Zum Anschluß der Anschlußleiter 6 weisen nun das erste Verbinderelement 22, das dritte Verbinderelement 50 und das vierte Verbinderelement 52 jeweils einen insbesondere als Krimpabschnitt 54 ausgebildeten Anschluß auf. Ferner weisen zum Anschluß der Drahtenden 2 der Statorwicklung 4 das zweite Verbinderelement 24a bzw. b, das dritte Verbinderelement 50 und das vierte Verbinderelement 52 jeweils eine Anschlußfahne 56 auf, die an ihrem freien Ende einen insbesondere als Klemmzunge 58 ausgebildeten Anschluß zur elektrisch leitenden Verbindung mit dem jeweiligen Drahtende 2 besitzt. Hierbei ist bevorzugt vorgesehen, daß jede Anschlußfahne 56 zusammen mit dem angeschlossenen Drahtende 2 aus einer mit dem übrigen, im wesentlichen parallel auf einer Auflageebene des Basisteils 10 liegenden Teil des jeweiligen Verbinderelementes 12 einen Winkel von insbesondere etwa 90° einschließenden Anschlußstellung-siehe Fig. 2 - derart in eine ebenfalls im wesentlichen auf dem Basisteil 10 liegende Betriebsstellung - in Fig. 1 dargestellt - umgebogen ist, daß hierdurch das Drahtende 2 einen ausgeprägten, eine mechanische Spannung vermeidenden Lockerungsbogen 60 erhält (Fig. 1). Hierbei sind die Anschlußfahnen 56 über Biegelinien 62 (in Fig. 1 gestrichelt eingezeichnet) mit dem übrigen Teil des Verbinderelementes 12 verbunden. Bei dieser vorteilhaften Ausführungsform werden die Drahtenden 2 somit in einer etwa senkrecht von dem Basisteil 10 hochstehenden Anordnung der Anschlußfahnen 56, d.h. in der Anschlußstellung, an den Klemmzungen 58 angeschlossen und insbesondere zusätzlich verschweißt. Nun werden die mit den Drahtenden 2 verbundenen Anschlußfahnen 56 in die Ebene des Basisteils 10 umgebogen, wodurch die Wicklungsdrähte mechanisch entlastet werden, so daß Drahtbrüche aufgrund von eventuell auftretenden mechanischen Schwingungen vorteilhafterweise vermieden werden.

Abschließend erfolgt vorzugsweise eine Abdeckung des mit den Verbinderelementen 12 versehenen Basisteils 10 mit einer isolierenden Abdeckung 64, die insbesondere ringscheibenförmig mit einem äußeren, sich axial in Richtung des Basisteils 10 erstreckenden Umfangsrand 66 ausgebildet ist (siehe Fig. 12). Die Abdeckung 64 wird hierbei auf geeignete Weise, z.B. stoffschlüssig, an dem Basisteil 10 und/oder an dem Stirnisolationsschaft 16 befestigt.

## Patentansprüche

1. Verschaltungsanordnung (1) zum Verbinden von Drahtenden (2) einer Statorwicklung (4) eines Elektromotors mit Anschlußleitem (6), mit einem aus elektrisch isolierendem Material bestehenden, insbesondere scheibenförmigen Basisteil (10), mit an dem Basisteil (10) gehalterten, elektrischen Verbinderelementen (12) zum Anschluß der Drahtenden (2) bzw. der Anschlußleiter (6), mit einer Aufnahme (18) für einen Temperaturwächter (20) sowie mit einem die Aufnahme (18) verschließenden, aus einem elektrisch isolierenden Material bestehenden Deckel (44),
**dadurch gekennzeichnet, daß** ein erstes (22) der Verbinderelemente (12) ein Kontaktfederelement (26) aufweist, welches im Bereich der Aufnahme (18) für den Temperaturwächter (20) mit einer Gegenkontaktfläche (28; 28a,28b) eines zweiten Verbinderelementes (24; 24a,24b) elektrisch leitend verbunden ist, wobei der Deckel (44) eine von dem Kontaktfederelement (26) durchgriffene Lochöffnung (46) aufweist.

2. Verschaltungsanordnung nach Anspruch 1,
**dadurch gekennzeichnet, daß** das erste Verbinderelement (22) mit dem zweiten Verbinderelement (24a) unmittelbar durch direkten Anlagekontakt des Kontaktfederelementes (26) an der Gegenkontaktfläche (28a) verbunden ist.

3. Verschaltungsanordnung nach Anspruch 2,
**dadurch gekennzeichnet, daß** das zweite Verbinderelement (24a) mit einem die Gegenkontaktfläche (28a) aufweisenden Kontaktabschnitt (30a) auf der dem Kontaktfederelement (26) zugekehrten Öffnungsseite der Aufnahme (18), insbesondere auf einer dort gebildeten Auflagestufe (32), gegen eine von dem Kontaktfederelement (26) bewirkte Andruckkraft (F) abgestützt ist.

4. Verschaltungsanordnung nach Anspruch 1,
**dadurch gekennzeichnet, daß** das erste Verbinderelement (22) mittelbar über den in der Aufnahme (18) angeordneten Temperaturwächter (20) mit dem zweiten Verbinderelement (24b) verbunden ist, wobei der Temperaturwächter (20) zwischen dem Kontaktfederelement (26) und der Gegenkontaktfläche (28b) jeweils mit elektrischem Anlagekontakt angeordnet ist.

5. Verschaltungsanordnung nach Anspruch 4,
**dadurch gekennzeichnet, daß** das zweite Verbinderelement (24b) mit einem die Gegenkontaktfläche (28b) aufweisenden Kontaktabschnitt (30b) innerhalb der Aufnahme (18) auf der dem Kontaktfederelement (26) abgekehrten Seite des Temperaturwächters (20) angeordnet ist.

6. Verschaltungsanordnung nach einem der Ansprüche 1 bis 5,
**dadurch gekennzeichnet, daß** die Verbinderelemente (12) als Blechstanzteile ausgebildet sind, die in im wesentlichen flach auf dem scheibenförmigen Basisteil (10) liegender Anordnung gehaltert sind, und zwar vorzugsweise durch Stiftansätze (38) des Basisteils (10), die zur Erzeugung von Formschlußverbindungen durch Löcher (40) der Verbinderelemente (12) geführt und insbesondere thermisch-mechanisch verformt sind.

7. Verschaltungsanordnung nach einem der Ansprüche 1 bis 6,
**dadurch gekennzeichnet, daß** das erste Verbinderelement (22) einen den Bereich der Temperaturwächter-Aufnahme (18) überdeckenden Brückenabschnitt (42) aufweist, aus dem das Kontaktfederelement (26) als Zunge freigeschnitten oder freigespart und in Richtung der Aufnahme (18) gebogen ist.

8. Verschaltungsanordnung nach Anspruch 7,
**dadurch gekennzeichnet, daß** der Brückenabschnitt (42)des ersten Verbinderelementes (22) auf dem Deckel (44) liegend angeordnet und vorzugsweise gemeinsam mit dem Deckel (44) an dem Basisteil (10) gehaltert ist.

9. Verschaltungsanordnung nach einem der Ansprüche 3 bis 8,
**dadurch gekennzeichnet, daß** zwischen dem Basisteil (10) und dem Deckel (44) eine schlitzartige Durchführöffnung (48) für den Kontaktabschnitt (30a,b) des zweiten Verbinderelementes (24a, b) gebildet ist.

10. Verschaltungsanordnung nach einem der Ansprüche 1 bis 9,
**dadurch gekennzeichnet, daß** das Basisteil (10) im Bereich der Aufnahme (18) auf deren dem Kontaktfederelement (26) abgekehrten Seite eine Bodenwandung (34) mit einer Lochöffnung (36) derart aufweist, daß im mit dem Stator verbundenen Zustand des Basisteils (10) der in der Aufnahme (18) angeordnete Temperaturwächter (20) durch die Lochöffnung (36) hindurch mit der Wärme der Statorwicklung (4) beaufschlagt wird.

11. Verschaltungsanordnung nach einem der Ansprüche 1 bis 10,
**dadurch gekennzeichnet, daß** zumindest einige der Verbinderelemente (12) zum Anschluß der Drahtenden (2) der Statortwicklung (4) jeweils eine Anschlußfahne (56) aufweisen, die einen insbesondere als Klemmzunge (58) ausgebildeten Anschluß zur elektrisch leitenden Verbindung mit dem jeweiligen Drahtende (2) besitzt.

12. Verschaltungsanordnung nach Anspruch 11,
**dadurch gekennzeichnet, daß** jede Anschlußfahne (56) zusammen mit dem angeschlossenen Drahtende (2) aus einer mit dem übrigen, im wesentlichen parallel auf einer Auflageebene des Basisteils (10) liegenden Teil des Verbinderelementes (12) einen Winkel von insbesondere etwa 90° einschließenden Anschlußstellung (Fig. 2) derart in eine im wesentlichen auf der Auflageebene liegende Betriebsstellung (Fig. 1) umgebogen ist, daß hierdurch das Drahtende (2) einen ausgeprägten, eine mechanische Spannung vermeidenden Lockerungsbogen (60) erhält.

13. Verschaltungsanordnung nach einem der Ansprüche 1 bis 12,
**dadurch gekennzeichnet, daß** zumindest einige der Verbinderelemente (12) zum Anschluß der Anschlußleiter (6) jeweils einen insbesondere als Krimpabschnitt (54) ausgebildeten Anschluß aufweisen.

14. Verschaltungsanordnung nach einem der Ansprüche 1 bis 13,
**gekennzeichnet durch** eine isolierende Abdeckung (64), die in einer das Basisteil (10) auf seiner der Statorwicklung (4) abgekehrten Oberseite überdeckenden Anordnung befestigbar ist.

## Claims

1. Interconnection arrangement (1) for connecting wire ends (2) of a stator winding (4) of an electric motor to connecting leads (6), with a base part (10) which consists of electrically insulating material and is in particular disc-shaped, with electrical connector elements (12), held on the base part (10), for the connection of the wire ends (2) or the connecting leads (6), with a receptacle (18) for a temperature monitor (20) and with a cover (44) which consists of electrically insulating material and closes the receptacle (18), **characterized in that** a first (22) of the connector elements (12) has a contact spring element (26), which is connected in an electrically conducting manner in the region of the receptacle (18) for the temperature monitor (20) to a counter-contact surface (28; 28a, 28b) of a second connector element (24; 24a, 24b), the cover (44) having a hole opening (46) through which the contact spring element (26) passes.

2. Interconnection arrangement according to Claim 1, **characterized in that** the first connector element (22) is directly connected to the second connector element (24a) by direct abutting contact of the contact spring element (26) against the counter-contact surface (28a).

3. Interconnection arrangement according to Claim 2, **characterized in that** the second connector element (24a) is supported with a contact portion (30a), having the counter-contact surface (28a), on the side of the opening of the receptacle (1B) facing the contact spring element (26), in particular on a bearing step (32) formed there, against a pressing force (F) brought about by the contact spring element (26).

4. Interconnection arrangement according to Claim 1, **characterized in that** the first connector element (22) is indirectly connected to the second connector element (24b) via the temperature monitor (20) arranged in the receptacle (18), the temperature monitor (20) being arranged between the contact spring element (26) and the counter-contact surface (28b) respectively with electrical abutting contact.

5. Interconnection arrangement according to Claim 4, **characterized in that** the second connector element (24b) is arranged with a contact portion (30b), having the counter-contact surface (28b), within the receptacle (18) on the side of the temperature monitor (20) facing away from the contact spring element (26).

6. Interconnection arrangement according to one of Claims 1 to 5, **characterized in that** the connector elements (12) are formed as punched sheet-metal parts, which are held in lying arrangement essentially flat on the disc-shaped base part (10), to be precise preferably by pin attachments (38) of the base part (10), which are led through holes (40) in the connector elements (12) and deformed, in particular thermomechanically, to produce positive connections.

7. Interconnection arrangement according to one of Claims 1 to 6, **characterized in that** the first connector element (22) has a bridge portion (42), which covers the region of the temperature monitor receptacle (18) and from which the contact spring element (26) is cut free or machined out as a tongue and bent in the direction of the receptacle (18).

8. Interconnection arrangement according to Claim 7, **characterized in that** the bridge portion (42) of the first connector element (22) is arranged lying on the cover (44) and is preferably held together with the cover (44) on the base part (10).

9. Interconnection arrangement according to one of Claims 3 to 8, **characterized in that** a slit-like through-opening (48) for the contact portion (30a, b) of the second connector element (24a, b) is formed between the base part (10) and the cover (44).

10. Interconnection arrangement according to one of Claims 1 to 9, **characterized in that** the base part (10) has in the region of the receptacle (18), on the side of the latter facing away from the contact spring element (36), a bottom wall (34) with a hole opening (36), in such a way that, in the state of the base part (10) in which it is connected to the stator, the temperature monitor (20) arranged in the receptacle (18) is subjected to the heat of the stator winding (4) through the hole opening (36).

11. Interconnection arrangement according to one of Claims 1 to 10, **characterized in that** at least some of the connector elements (12) have for the connection of the wire ends (2) of the stator winding (4) in each case a connecting lug (56), which has a terminal, designed in particular as a clamping tongue (58), for the electrically conducting connection to the respective wire end (2).

12. Interconnection arrangement according to Claim 11, **characterized in that** each connecting lug (56) together with the connected wire end (2) is bent around from a connecting position (Figure 2), forming an angle of in particular approximately 90° with the remaining part of the connector element (12), lying essentially parallel on a bearing plane of the base part (10), into an operating position (Figure 1), lying essentially on the bearing plane, in such a way that, as a result, the wire end (2) is provided with a pronounced loosening bow (60), avoiding mechanical stress.

13. Interconnection arrangement according to one of Claims 1 to 12, **characterized in that** at least some of the connector elements (12) have for the connection of the connecting leads (6) in each case a terminal formed in particular as a crimping portion (54).

14. Interconnection arrangement according to one of Claims 1 to 13, **characterized by** an insulating covering (64), which can be fastened in an arrangement covering the base part (10) on its upper side, facing away from the stator winding (4).

## Revendications

1. Dispositif de câblage (1) destiné à connecter des extrémités de fils (2) d'un enroulement de stator (4) d'un moteur électrique à des conducteurs de raccordement (6), comprenant une partie de base (10) faite d'une matière isolante électriquement, en particulier en forme de disque, des éléments de connecteurs électriques (12) fixés à la partie de base (10) destinés au raccordement des extrémités de fils (2) et, respectivement, des conducteurs de raccordement (6), un logement (18) prévu pour un contrôleur de température (20), ainsi qu'un couvercle (44) fait d'une matière isolante électriquement, qui ferme le logement (18),
**caractérisé en ce qu'**un premier (22) des éléments de connecteurs (12) présente un élément de contact élastique (26) qui, dans la région du logement (18) prévu pour le contrôleur de température (20), est relié par une liaison conductrice électriquement à une surface de contact conjuguée (28 ; 28a, 28b) d'un deuxième élément de connecteur (24 ; 24a, 24b), le couvercle (44) présentant une ouverture (46) formée d'un trou qui est traversée par l'élément de contact élastique (26).

2. Dispositif de câblage selon la revendication 1,
**caractérisé en ce que** le premier élément de connecteur (22) est connecté directement au deuxième élément de connecteur (24a) par contact en appui direct de l'élément de contact élastique (26) sur la surface de contact conjuguée (28a).

3. Dispositif de câblage selon la revendication 2,
**caractérisé en ce que** le deuxième élément de connecteur (24a) est appuyé, par un segment de contact (30a) qui présente une surface de contact conjuguée (28a) sur le coté d'ouverture du logement (18) qui est dirigé vers l'élément de contact élastique (26), en particulier sur un épaulement de portée (32) formé à cet endroit, en antagonisme par rapport à une force de compression (F) développée par l'élément de contact élastique (26).

4. Dispositif de câblage selon la revendication 1,
**caractérisé en ce que** le premier élément de connecteur (22) est connecté indirectement au deuxième élément de connecteur (24b) par l'intermédiaire du contrôleur de température (20) disposé dans le logement (18), le contrôleur de température (20) étant disposé entre l'élément de contact élastique (26) et la surface de contact conjuguée (28b), à chaque fois avec un contact électrique en appui.

5. Dispositif de câblage selon la revendication 4,
**caractérisé en ce qu'**un segment de contact (30b) du deuxième élément de connecteur (24b) qui présente la surface de contact conjuguée (28b) est disposé à l'intérieur du logement (18) sur le côté du contrôleur de température (20) qui est éloigné de l'élément de contact élastique (26).

6. Dispositif de câblage selon une des revendications 1 à 5,
**caractérisé en ce que** les éléments de connecteurs (12) sont constitués par des pièces en tôle découpée qui sont fixées dans une disposition sensiblement à plat sur la partie de base (10) en forme de disque, et ceci de préférence par des protubérances (38) en forme de broche de la partie de base (10), lesquelles sont enfilées à travers des trous (40) des éléments de connecteurs (12) et, en particulier, déformées par voie thermique-mécanique, pour la production de liaisons par sûreté de forme.

7. Dispositif de câblage selon une des revendications 1 à 6,
**caractérisé en ce que** le premier élément de connecteur (22) présente un segment en pont (42) qui surmonte la région du logement (18) du contrôleur de température, l'élément de contact élastique (26) étant découpé ou ménagé dans ce segment en formant une languette et étant recourbé en direction du logement (18).

8. Dispositif de câblage selon la revendication 7,
**caractérisé en ce que** le segment en pont (42) du premier élément de connecteur (22) est disposé en appui sur le couvercle (44) et est de préférence fixé à la partie de base (10) conjointement avec le couvercle (44).

9. Dispositif de câblage selon une des revendications 3 à 8,
**caractérisé en ce qu'**entre la partie de base (10) et le couvercle (44), est formée une ouverture de passage (48) en forme de fente prévue pour le segment de contact (30a, 30b) du deuxième élément de connecteur (24a, b).

10. Dispositif de câblage selon une des revendications 1 à 9,
**caractérisé en ce que**, dans la région du logement (18), sur son côté qui est éloigné de l'élément de contact élastique (26), la partie de base (10) présente une paroi de fond (34) munie d'une ouverture (36) formée d'un trou, de telle manière que, dans l'état de la partie de base (10) dans lequel elle est reliée au stator, le contrôleur de température (20) disposé dans le logement (18) est sollicité par la chaleur de l'enroulement du stator (4) à travers l'ouverture formée d'un trou (36).

11. Dispositif de câblage selon une des revendications 1 à 10,
**caractérisé en ce que**, pour le raccordement des extrémités de fil (2) de l'enroulement de stator (4), au moins certains des éléments de connecteurs (12) présentent chacun une queue de raccordement (56) qui possède une connexion, en particulier réalisée sous la forme d'une languette pince (58), pour établir une liaison conductrice de l'électricité avec l'extrémité de fil (2) correspondante.

12. Dispositif de câblage selon la revendication 11,
**caractérisé en ce qu'**à partir d'une position de raccordement (Fig. 2) qui enferme un angle, en particulier d'environ 90 °, avec la partie restante de l'élément de connecteur (12), qui est disposée sensiblement parallèlement sur un plan de portée de la partie de base (10), chaque queue de raccordement (56), avec l'extrémité de fil (2) qui y est raccordée, est recourbée dans une position de service (Fig. 1) située sensiblement à plat sur le plan de portée de telle sorte que, de cette façon, l'extrémité de fil (2) prend un coude de détente prononcé (60) qui évite une contrainte mécanique.

13. Dispositif de câblage selon une des revendications 1 à 12,
**caractérisé en ce qu'**au moins certains des éléments de connecteurs (12) destinés au raccordement des conducteurs de raccordement (6) présentent chacun un raccordement formé en particulier par un segment de sertissage (54).

14. Dispositif de câblage selon une des revendications 1 à 13,
**caractérisé par** un recouvrement isolant (64) qui peut être fixé dans une disposition qui recouvre la partie de base (10) sur son côté supérieur qui est éloigné de l'enroulement de stator (4).
